# EUROPEAN PATENT SPECIFICATION

(11) **EP 3 141 165 B1**
(45) Date of publication and mention of the grant of the patent: **31.10.2018**
(21) Application number: 14891489.8
(22) Date of filing: 04.09.2014
(51) Int. Cl.: A47J 31/44, A47J 31/40, A47J 31/36

(54) **PACK FEEDING/DETACHING MECHANISM FOR BEVERAGE BREWING DEVICE**
PACKUNGSZUFÜHR-/-ABLÖSEMECHANISMUS FÜR GETRÄNKEBRAUVORRICHTUNG
MÉCANISME D'INTRODUCTION/DE SÉPARATION D'EMBALLAGES POUR DISPOSITIF D'INFUSION DE BOISSONS

(30) Priority: 09.05.2014 CN 201410195743
(43) Date of publication of application: 15.03.2017
(73) Proprietor: Ningbo Quanjing Electric Technology Co. Ltd., Zhejiang 315324 (CN)
(72) Inventor: JING, Yudong, Cixi Zhejiang 315324 (CN); DU, Yuanfei, Cixi Zhejiang 315324 (CN)
(74) Representative: Orr, Robert
(86) International application number: PCT/CN2014/000828
(87) International publication number: WO 2015/168824

(56) References cited:
- EP-A1- 1 721 553
- WO-A1-2008/014830
- WO-A1-2008/096385
- CN-A- 103 989 407
- CN-U- 203 861 028

## Description

### Field of the Invention

The present invention relates to a capsules delivery and rejection mechanism in a beverage extraction device, and the beverage extraction device mainly refers to a coffeemaker.

### Description of the Prior Art

As one kind of beverage extraction devices, the existing coffeemaker generally has a function of automatic capsule rejection for ease of operation. A Chinese Utility Model Patent CN201044719Y (Patent No.: 200720110811.2), titled "Capsule Automatically Rejecting Mechanism of Coffeemaker", disclosed a coffeemaker which has a simple and rational structure, is stable and convenient in operation and feels good in touching is invented. In the coffeemaker, by jaws located on two sides of the second frame and a shaft-groove guiding structure in fit with the jaws, at least the front portions of the jaws are driven to complete one opening and closing relatively to the second frame when the second frame moves backward. For ease of capsule rejection, a spring is provided inside the chamber of the first frame. The forgoing coffeemaker structure is somewhat improved. However, it has the disadvantage of unreliable capsule rejection and dropping. If no spring is provided inside the chamber of the first frame, it is required to pull the capsule from the container relying on the adhesion between the capsule and the front end surface of the second frame during the capsule rejection. If the adhesion is low, the capsule may be left in the concave chamber and thus the capsule dropping fails. If a spring is provided inside the concave chamber, after the first frame and the second frame are closed, the spring exerts a large force onto the capsule and thus the adhesion between the capsule and the front end surface of the second frame becomes too high, so that the capsule may be sucked on the front end surface of the second frame during the capsule rejection. As a result, even if the jaws open, it is difficult for the capsule to fall off. In addition, due to the arrangement of a spring, after extraction, the spring will be soaked in the coffee, and consequently, the coffee is contaminated and the taste is affected.

Another Chinese Utility Model Patent CN202619402U (Patent No.: ZL201220211428.7), titled "Capsule Automatically Dropping Mechanism of Beverage Preparation Device", disclosed a capsule dropping mechanism comprising: a housing; a first frame having a chamber for holding a capsule with a circular edge; a second frame; two jaws, characterized in that notches for receiving clamp portions are formed on left and right sides of a rear end surface of the first frame; two groups of guiding grooves for guiding a front shaft and a rear shaft of the jaws are provided on the housing; in a state in which the first frame and the second frame are totally closed, the clamp portions on the two jaws are located within the notch of the first frame; and in a state in which the second frame moves backward, the limiting portions on the two jaws move backward along with the second frame and come into contact with the circular edge of the capsule to drive the capsule to move backward and out of the chamber. The driving of the clamp portions can push the capsule from the chamber of the first frame stably, ensuring the reliability of capsule dropping. The whole capsule dropping process is simple and it is unnecessary to provide a spring inside the chamber.

In the foregoing two improved patents, two groups guiding grooves for guiding the front shaft and the rear shaft of the jaws are provided on the housing, the jaws move forward along with the second frame during the whole capsule delivery process, and there is no idle stroke between the jaws and the second frame. Therefore, in order to completely deliver a capsule into the chamber and the guiding grooves can guide the jaws to open and close according to the requirement of capsule dropping, it is necessary to provide a large overall length for the guiding grooves. The guiding grooves include a straight rear groove, a straight front groove, a curved middle groove and a curved front groove, the straight front groove is in front of the straight rear groove and inclined outward, the curved middle groove is on the outer side of the straight rear groove, and the curved front groove and the straight front groove are separated by a second barrier. Accordingly, in the foregoing two patents, the overall length of the guiding grooves is large, and the working process of the coffeemaker is completed. Consequently, the length of the whole housing cannot be made small and the coffeemaker cannot be miniaturized.

Document WO-A-2008/096385 discloses a capsule delivery and rejection mechanism according to the preamble of independent claim 1.

### Summary of the Invention

In view of the current situation of the prior art, a technical problem to be solved by the present invention is to provide a novel capsule delivery and rejection mechanism for a beverage brewing device, which has a simpler and more rational structure and allows for reliable capsule delivery and rejection. The mechanism has a smaller overall size and is low in cost and easy to assemble.

According to the present invention, there is provided a capsule delivery and rejection mechanism in a beverage brewing device, as defined in claim 1.

Optional further features of the capsule delivery and rejection mechanism are defined in the dependent claims.

Each guiding block may be arranged so that it is able to be deflected.

Preferably, an elastic mechanism for enabling the jaws to keep an inward clamping trend is provided on the second frame. The elastic mechanism enables the jaws to keep a clamping trend so as to make the jaws clamp the beverage capsule better, or to make the jaws to return to the original positions during the backward movement process so as to drive the beverage capsule. Of course, the functions of the elastic mechanism can be realized by a similar guide structure.

Preferably, the elastic mechanism is a torsion spring provided on a spindle at the rear end of the jaws. The torsion spring is easy to assemble. Of course, other elastic members, such as a spring, can also be used.

Preferably, the capsule delivery and rejection mechanism according to claim 3, characterized in that, a recess for receiving each jaw is respectively provided on the left and right sidewalls of the second frame, and the rear end of each jaw is located inside the recess; a first end of the torsion spring is hooked through a small hole formed on one jaw, while a second end of the torsion spring resists against the inner wall of the recess of the jaw. The recess restrains the deflection of each jaw, and ensures that each jaw is deflected within a rational range.

Preferably, slots are provided at the front ends of the jaws; the guiding blocks are inserted into the slots and rotatably connected into the slots. Upper and lower walls of the slots restrain the guiding blocks in the up-down direction, so that the deflection stability of the guiding blocks is ensured; when in the original positions, the rear end surfaces of the guiding blocks are in contact with the bottom surfaces of the slots. The contact of the guiding blocks with the bottom surfaces of the slots ensures that the guiding surfaces of the guiding blocks are deflected in an opposite direction under the squeezing of the sidewalls of the first frame, so that the guiding blocks can drive the jaws more stably to expand outward.

Preferably, a shaft is provided protruding on the upper and lower surfaces of each guiding block, and each jaw has two through holes respectively locating at the upper and lower sides of each slot for two ends of each shaft to pass through; the upper and lower end surfaces of the shafts are slopes, and the upper and lower inner walls of each slot are also slopes. Such a structure is convenient to mount the guiding blocks into the slots. During mounting, it is only required to squeeze the shafts into the openings in the front portion of the slots, so that the slopes of the shafts are fitted to the slopes of the upper and lower walls of the slots; the shafts push the upper and lower walls of the slots outward to deform the upper and lower walls, and then the shafts are squeezed between the upper and lower walls until the shafts are located at slot positions on the upper and lower walls of the slots; the upper and lower walls of the slots are reset under the action of their own restoring force, and the shafts enter the slots, so that the rotatable mounting of the guiding blocks is finished.

Preferably, the resetting mechanism is a stopping part which is provided on a housing sidewall and in stopping fit to the sidewalls of the guiding blocks in the state where the guiding blocks are turned over, the sidewall of the second frame moved backward to the guiding blocks comes into contact with the stopping part and continues to move backward, and the stopping part exerts a forward thrust onto the sidewalls of the guiding blocks to impel the guiding blocks to reset. This resetting mechanism completes the interference to the sidewalls of the guiding blocks through the stopping part. Of source, the resetting mechanism can also be a torsion spring mechanism.

Preferably, each guiding surface is a slope. The slopes can decompose a force acting on the guiding blocks into a larger and positive thrust acting on the guiding blocks. The larger thrust allows for the better deflection of the guiding blocks, and the deflected torsion and the arrangement of the slopes can reduce the friction between the guiding blocks and the sidewalls of the second frame, so that it is easier to push the second frame.

Preferably, an opening which runs through in an axial direction and allows the circular edge of the capsule to insert therein is formed at an inner end of the clamp portion, and the bottom surface of this opening is a cambered surface which is bent inward. This opening restrains the circular edge of the beverage capsule, and the inward bent bottom surface of the opening supports the circular edge of the capsule. Such a structure allows the capsule to be stably restrained within the clamping opening formed between the two clamp portions during the capsule delivery and rejection process, so that the stability of capsule delivery is ensured.

Compared with the prior art, the present invention has the following advantages: in a state where the first frame and the second frame are completely opened, the elastic mechanisms of the two jaws can hold a capsule when they are closed; in a state where the second frame is moved forward so that the capsule is partially located inside the chamber, the guiding surfaces of the guiding blocks come into contact with the sidewalls of the first frame and then continues to move forward, and each sidewall of the first frame has an outward force onto each guiding surface so as to make the two guiding blocks to be opened, so that the capsule is further pushed into the chamber; the second frame is further moved forward, so the first frame and the second frame are completely closed to form an extraction chamber, and the circular edge of the capsule is externally exposed out from the periphery of the front end surface of the second frame, so that the capsule loading is completed, and the rear end surface of the guiding blocks are located in the rear of the stepped surface on the first frame; subsequently, the second frame is moved backward, the stepped surface exerts a forward thrust to the rear end surfaces of the guiding blocks to impel the guiding blocks to turn outward, and the clamp portions slide along the outer wall of the first frame until the rear end surfaces of the clamp portions come into contact with the circular edge of the capsule; the second frame drives the jaws to continue to move backward, and the rear end surfaces of the clamp portions push the circular edge so as to carry the capsule out from the chamber; after the capsule is substantially removed from the chamber, the capsule drops from the dropping port due to its gravity, and the guiding blocks are restored to the original positions under the action of the resetting mechanism for waiting for the next capsule delivery. Therefore, the capsule delivery and rejection mechanism realizes the capsule delivery and rejection mainly by the mutual cooperation between the jaws, the guiding blocks and the first frame. The capsule delivery and rejection design is very skillful, and the primary complicated shaft-groove fitting structure is omitted in the whole structure, leading to simpler overall structure and manufacture process and low cost.

### Brief Description of the Drawings

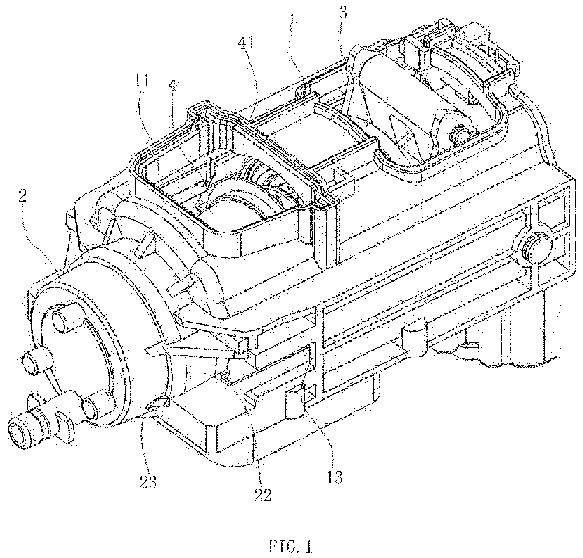

Fig. 1 is a perspective view of a capsule delivery and rejection mechanism for a beverage brewing device according to an embodiment of the present invention;
Fig. 2 is a sectional view of the mechanism according to the embodiment of the present invention (when the beverage brewing device is opened and the capsule is loaded);
Fig.3 is a sectional view of the mechanism according to the embodiment of the present invention (when guiding surfaces of the guiding blocks come into contact with sidewalls of the first frame);
Fig. 4 is a sectional view of the mechanism according to the embodiment of the present invention (when the guiding surfaces slide along the sidewalls of the first frame to impel the jaws to expand outward);
Fig. 5 is a sectional view of the mechanism according to the embodiment of the present invention (when the two frames are closed for extraction);
Fig. 6 is a sectional view of the mechanism according to the embodiment of the present invention (when the second frame is moved backward to come into contact with the stepped surface);
Fig. 7 is a sectional view of the mechanism according to the embodiment of the present invention (when the second frame is moved backward to exert a thrust onto the rear end surfaces of the guiding blocks so as to impel the guiding blocks to turn outward, and the rear end surfaces of the clamp portions come into contact with the circular edge);
Fig. 8 is a sectional view of the mechanism according to the embodiment of the present invention (when the second frame is moved backward to the rear end surfaces of the clamp portions to carry the capsule out, and the rear end surfaces of the guiding blocks come into contact with the clamp portions);

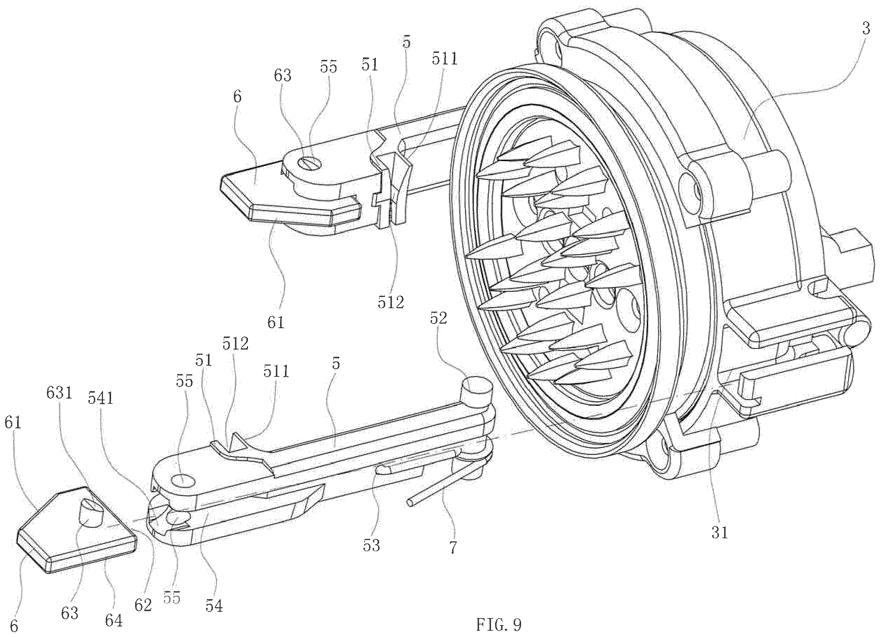

Fig. 9 is an assembly diagram of the guiding blocks, the jaws and the second frame according to the embodiment of the present invention;
Fig. 10 is a perspective view of jaws according to the embodiment of the present invention; and
Fig. 11 is a perspective view of guiding blocks according to the embodiment of the present invention.

### Detailed Description of the Preferred Embodiment

To enable a further understanding of the present invention content of the invention herein, refer to the detailed description of the invention and the accompanying drawings below:

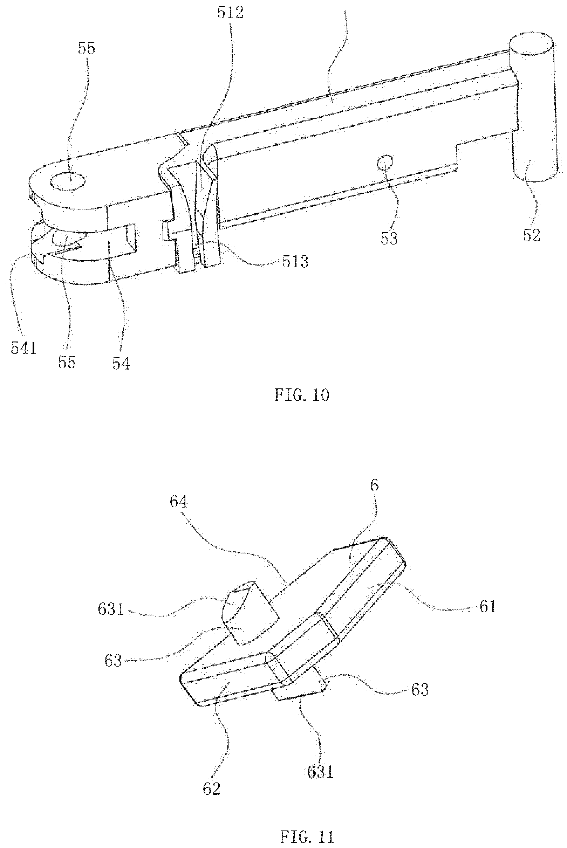

Fig. 10 - Fig. 11 show a preferred embodiment of a capsule delivery and rejection mechanism for a beverage brewing device.

The capsule delivery and rejection mechanism for a beverage brewing device comprises a housing 1 having a front portion, a back portion, a loading port 11, and a dropping port 12;
a first frame 2 positioned inside the front portion of the housing 1, the first frame 2 having a left side, a right side, a chamber 21 for holding a capsule 4 with a circular edge 41, the first frame 2 further having a liquid discharge passage, the first frame 2 being integrated with the housing 1;
a second frame 3 having a left side and a right side, disposed inside the back portion of the housing 1 and being movable forward and backward relative to the first frame 2 under the driving of a driving structure, the second frame 3 having a liquid intake passage;
two jaws 5, each jaw 5 having a front end and a rear end, the rear end of each jaw respectively rotatably connected to the left and right sides of the second frame 3;
two guiding blocks 6, sheet-shaped, each guiding block 6 being rotatably arranged at front of each jaw 5; and
a resetting mechanism for resetting the guiding blocks 6, the resetting mechanism being able to restore the guiding blocks 6 to the original positions after the second frame 3 is moved backward to carry the capsule 4 out from the chamber 21.

Wherein, a recess 31 for receiving each jaw 5 is respectively provided on the left and right sidewalls of the second frame 3, and the rear end of each jaw 5 is located inside the recess 31 and rotatably arranged at a rotating shaft 52 inside the recess 31, and an elastic mechanism for allowing the jaws 52 to keep an inward clamping trend is provided on the second frame 3. The elastic mechanism in this embodiment is a torsion spring 7 provided on the spindles 52 at the rear end of the jaws 5; a first end of the torsion spring 7 is hooked through a small hole 53 formed on one jaw 5, while a second end of the torsion spring 7 resists against the inner wall of the recess 31 of the jaw 5.

The front end of each jaw 5 is a clamp portion 51 extending to the front of the second frame 3, the clamp portion 51 has a clamping opening capable of clamping the circular edge 41 of the capsule 4; an opening 512 which runs through in an axial direction and allows the circular edge 41 of the capsule 4 to insert therein is formed at an inner end of the clamp portion 51, and the bottom surface 513 of this opening 512 is a cambered surface which is bent inward.

Each guiding block 6 has a rear end surface 62 and a guiding surface 61 at the inner side of each guiding block 6 which can be guided to open when the guiding surface 61 touching the sidewalls 22 of the first frame 2; each guiding surface 61 is a slope; the guiding blocks 6 can move forward with the jaws 5 from their original positions and touch the sidewalls 22 of the first frame 2, and then continue to move forward, at this time, each sidewall 22 of the first frame 2 has an outward force onto each guiding surface 61 so as to make the two guiding blocks 6 to be opened.

Slots 54 are provided at the front ends of the jaws 5, the guiding blocks 6 are inserted into the slots 54 and rotatably connected into the slots 54; when in the original positions, the rear end faces of the guiding blocks 6 are in contact with the bottom surfaces of the slots 54.

A shaft 63 is provided protruding on the upper and lower surfaces of each guiding block 6, and each jaw 5 has two through holes 55 respectively locating at the upper and lower sides of each slot 54 for two ends of each shaft 63 to pass through; the upper and lower end surfaces 631 of the shafts 63 are slopes, and the upper and lower inner walls 541 of each slot 54 are also slopes.

An annual stepped surface 23 is provided on the periphery of the first frame 2, when the second frame 3 is closed with the first frame 2 and then move backward, the stepped surface 23 has a forward force onto the rear end surface 62 of each guiding block 6 to force each guiding block 6 to rotate outward.

A stepped surface 23 is provided on an outer side of the first frame 2. In a state where the second frame 3 is closed and then moved backward, the stepped surface 23 exerts a forward thrust onto the rear end surfaces 62 of the guiding blocks 6 to force the guiding blocks 6 to rotate outward.

The rear end surface 511 of each clamp portion 51 can touch with the circular edge 41 of the capsule 4, when each clamp portion 51 continues to move backward after touching with the circular edge 41 of the capsule; the rear end surface 511 of each clamp portion 51 will pull the circular edge 41 to carry the capsule 4 out from the chamber 21.

In this embodiment, the resetting mechanism is a stopping part 13 which is provided on a housing 1 sidewall and in stopping fit to the sidewalls 64 of the guiding blocks 6; in the state where the guiding blocks 6 are turned over, the sidewall 64 of the second frame 3 moved backward to the guiding blocks 6 comes into contact with the stopping part 13 and continues to move backward, and the stopping part 13 exerts a forward thrust onto the sidewalls 64 of the guiding blocks 6 to impel the guiding blocks 6 to reset.

The operating process of the capsule delivery and rejection mechanism is as follows.

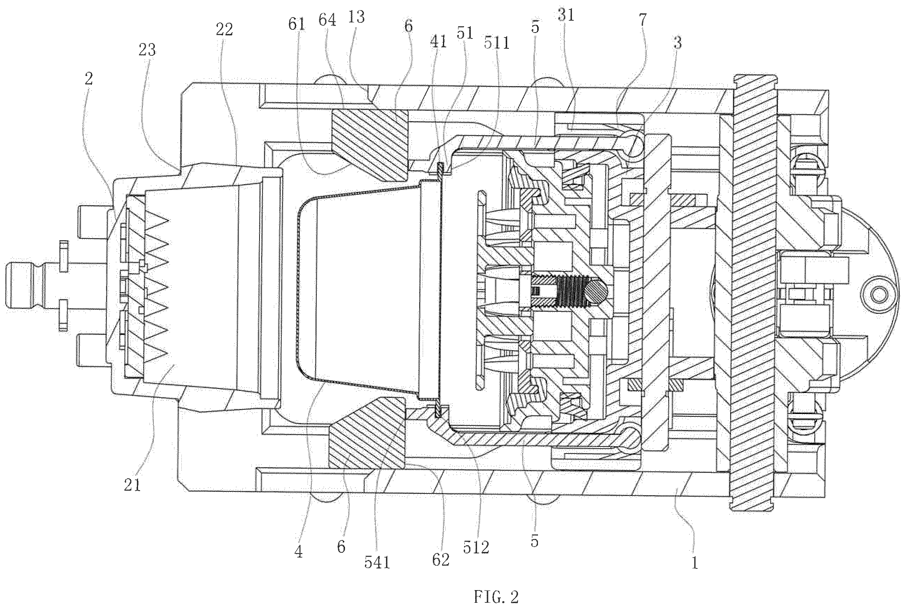

Capsule loading: As shown in Fig. 2, the driving structure drives the second frame 3 to move backward to open, the two jaws 5 are closed and thus can hold the capsule 4, and the capsule 4 is loaded from the loading port 11 and placed between the two clamp portions, with the circular edge 41 of the capsule 4 being inserted from the slot 131 and supported on the bottom surface 132 of the slot 131.

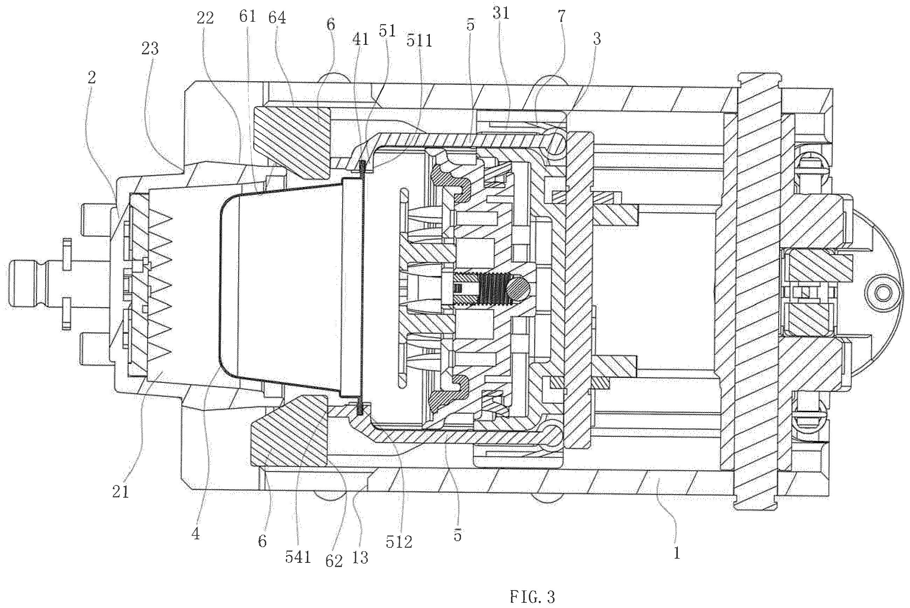

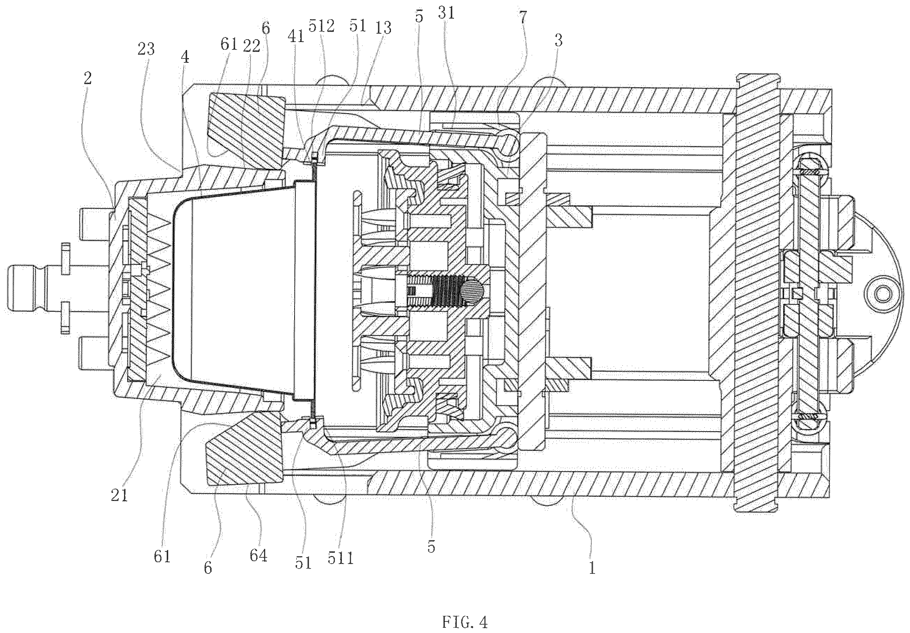

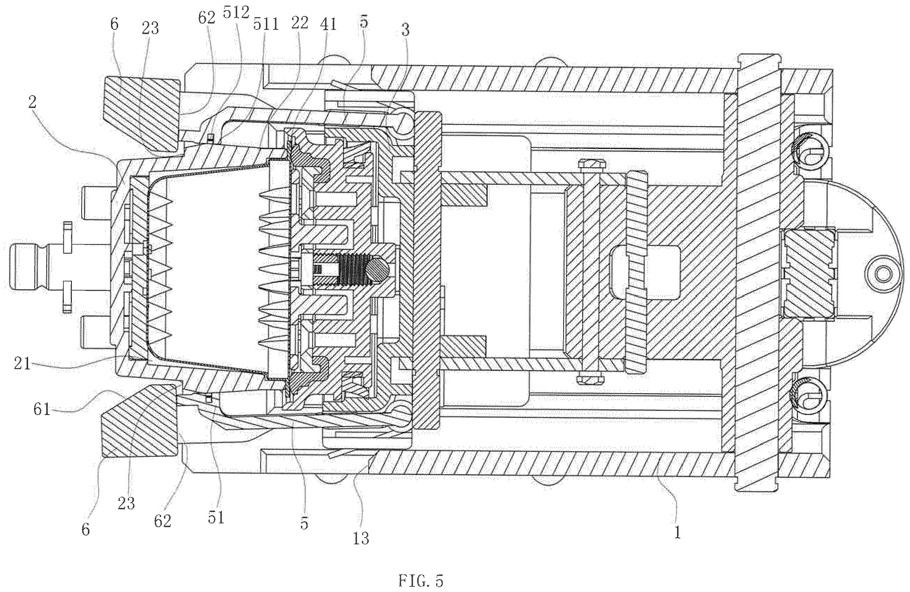

Capsule delivery: As shown in Fig. 3 - Fig. 5, the second frame 3 is moved forward, and since the capsule 4 is restrained between the clamp portions 51 at the front ends of the two jaws, the forward movement of the second frame 3 can drive the capsule and the jaws to move forward together; and in a state where the second frame 3 is moved forward so that the capsule 4 is partially located inside the chamber 21, the guiding surfaces 61 of the guiding blocks 6 come into contact with the sidewalls 22 of the first frame 2 and then continue to move forward, each sidewall 22 of the first frame 2 has an outward force onto each guiding surface 61 so as to make the two guiding blocks 6 to be opened, in order to ensure that the capsule 4 is further pushed into the chamber 21. The second frame 3 is further moved forward, the first frame 2 and the second frame 3 are completely closed to form an extraction chamber, and the circular edge 41 of the capsule 4 is externally exposed from the periphery of the front end surface of the second frame 3 to complete the capsule loading. Meanwhile, the rear end surfaces 62 of the guiding blocks 6 are located at the rear portion of the stepped surface 23 on the first frame 2 to complete the capsule loading. Then, extraction can be started.

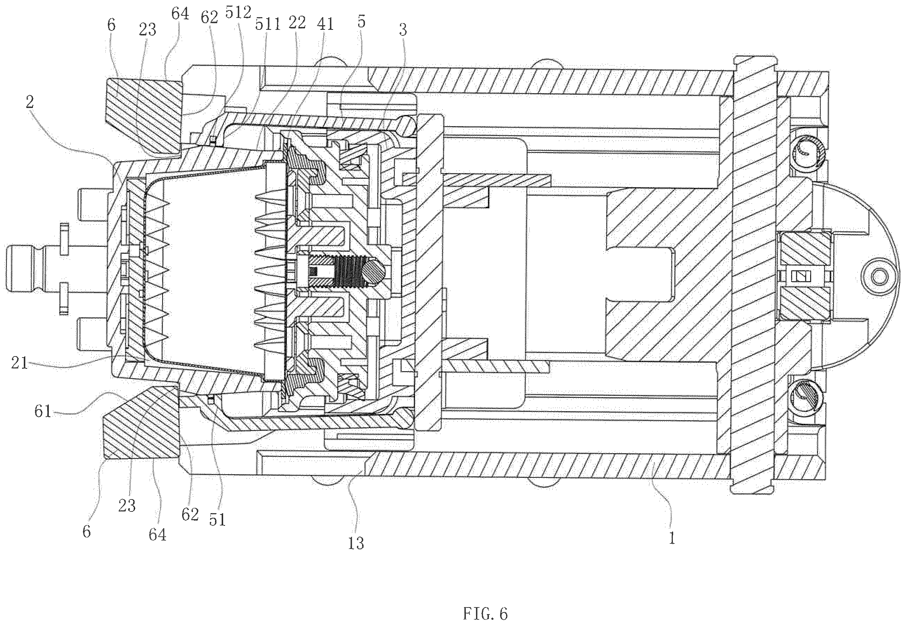

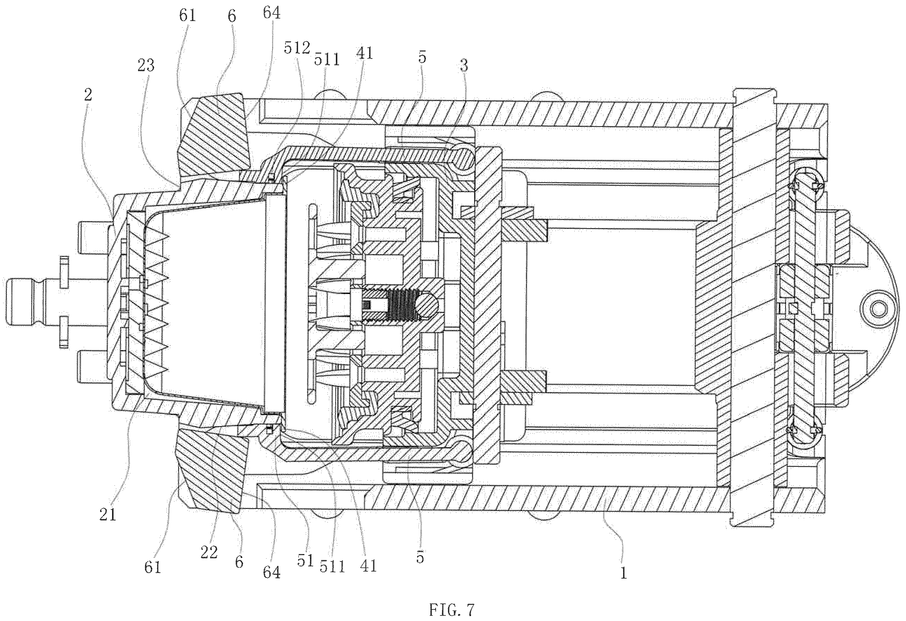

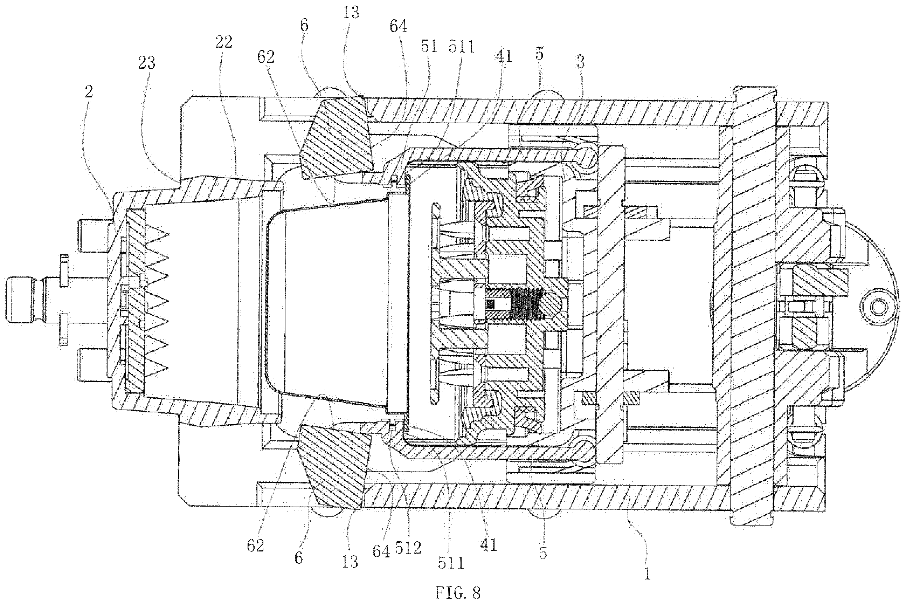

Capsule rejection: As shown in Fig. 6 - Fig. 8, at the end of extraction, the second frame 3 is moved backward, the stepped surface 23 exerts a forward thrust onto the rear end surfaces 62 of the guiding blocks 6 to impel the guiding blocks 6 to turn outward, and the clamp portions 51 slide along the outer wall of the first frame 2 until the rear end surfaces 511 of the clamp portions 51 come into contact with the circular edge 41 of the capsule 4. The second frame 3 drives the jaws 5 to continue to move backward, and the rear end surfaces 511 of the clamp portions 51 push the circular edge 41 and then carry the capsule 4 out from the chamber 21. When the capsule 4 is substantially removed from the chamber 21, the capsule 4 drops from the dropping port 12 due to its gravity, and the guiding blocks 6 are restored to the original positions under the action of the resetting mechanism. In other words, in the backward movement process of the second frame 3, the jaws 5 and the guiding blocks 6, since the guiding blocks 6 are turned outward, and after the guiding blocks 6 are moved backward to the sidewalls 64 of the guiding blocks and the stopping part 13, the guiding blocks 6 are further moved backward. The stopping part 13 exerts a forward thrust onto the sidewalls 64 of the guiding blocks 6 to impel the guiding blocks 6 to restore to wait for the next capsule delivery.

## Claims

1. A capsule delivery and rejection mechanism for a beverage brewing device, comprising:
a housing (1) having a front portion, a back portion, a loading port (11), and a dropping port (12);
a first frame (2) positioned inside the front portion of the housing (1), the first frame (2) having a left side, a right side, a chamber (21) for holding a capsule (4) with a circular edge (41);
a second frame (3) having a left side and a right side, disposed inside the back portion of the housing (1) and being movable forward and backward relative to the first frame (2);
wherein the capsule delivery and rejection mechanism further comprises:
two jaws (5), each jaw (5) having a front end and a rear end, the rear end of each jaw respectively rotatably connected to the left and right sides of the second frame (3), the front end of each jaw (5) being a clamp portion (51) extending to the front of the second frame (3), the clamp portion (51) having a clamping opening capable of clamping the circular edge (41) of the capsule (4);
two guiding blocks (6), each guiding block (6) being arranged at front of each jaw (5), each guiding block (6) having a guiding surface (61) at the inner side of each guiding block (6) which can be guided to open when the guiding surface (61) touching the sidewalls (22) of the first frame (2), the guiding blocks (6) can move forward with the jaws (5) from their original positions and touch the sidewalls (22) of the first frame (2), and then continue to move forward, at this time, each sidewall (22) of the first frame (2) has an outward force onto each guiding surface (61) so as to make the two guiding blocks (6) to be opened;
a resetting mechanism for resetting the guiding blocks (6), the resetting mechanism being able to restore the guiding blocks (6) to the original positions after the second frame (3) is moved backward to carry the capsule (4) out from the chamber (21);
wherein the rear end surface (511) of each clamp portion (51) can touch with the circular edge (41) of the capsule (4), when each clamp portion (51) continues to move backward after touching with the circular edge (41) of the capsule; the rear end surface (511) of each clamp portion (51) will pull the circular edge (41) to carry the capsule (4) out from the chamber (21);
**characterised in that**
the guiding blocks (6) are rotatably arranged at front of each jaw (5), each guiding block having a rear end surface (62), wherein an annual stepped surface (23) is provided on the periphery of the first frame (2), when the second frame (3) is closed with the first frame (2) and then move backward, the stepped surface (223) has a forward force onto the rear end surface (62) of each guiding block (6) to force each guiding block (6) to rotate outward.

2. The capsule delivery and rejection mechanism according to claim 1, wherein an elastic mechanism for enabling the jaws (5) to keep an inward clamping trend is provided on the second frame (3).

3. The capsule delivery and rejection mechanism according to claim 2, wherein the elastic mechanism is a torsion spring (7) provided on a spindle (52) at the rear end of the jaws (5).

4. The capsule delivery and rejection mechanism according to claim 3, wherein a recess (31) for receiving each jaw (5) is respectively provided on the left and right sidewalls of the second frame (3), and the rear end of each jaw (5) is located inside the recess (31); a first end of the torsion spring (7) is hooked through a small hole (53) formed on one jaw (5), while a second end of the torsion spring (7) resists against the inner wall of the recess (31) of the jaw (5).

5. The capsule delivery and rejection mechanism according to claim 1, wherein slots (54) are provided at the front ends of the jaws (5); the guiding blocks (6) are inserted into the slots (54) and rotatably connected into the slots (54); when in the original positions, the rear end faces of the guiding blocks (6) are in contact with the bottom surfaces of the slots (54).

6. The capsule delivery and rejection mechanism according to claim 5, wherein a shaft (63) is provided protruding on the upper and lower surfaces of each guiding block (6), and each jaw (5) has two through holes (55) respectively locating at the upper and lower sides of each slot (54) for two ends of each shaft (63) to pass through; the upper and lower end surfaces (631) of the shafts (63) are slopes, and the upper and lower inner walls (541) of each slot (54) are also slopes.

7. The capsule delivery and rejection mechanism according to claim 1, wherein the resetting mechanism is a stopping part (13) which is provided on a housing (1) sidewall and in stopping fit to the sidewalls 64 of the guiding blocks (6); in the state where the guiding blocks (6) are turned over, the sidewall (64) of the second frame (3) moved backward to the guiding blocks (6) comes into contact with the stopping part (13) and continues to move backward, and the stopping part (13) exerts a forward thrust onto the sidewalls (64) of the guiding blocks (6) to impel the guiding blocks (6) to reset.

8. The capsule delivery and rejection mechanism according to claim 1, wherein each guiding surface (61) is a slope.

9. The capsule delivery and rejection mechanism according to claim 1, wherein an opening (512) which runs through in an axial direction and allows the circular edge (41) of the capsule (4) to insert therein is formed at an inner end of the clamp portion (51), and the bottom surface (513) of this opening (512) is a cambered surface which is bent inward.

## Patentansprüche

1. Ein Kapselzuführ- und Auswurfmechanismus für eine Getränkebrühvorrichtung, aufweisend:
ein Gehäuse (1) mit einem vorderen Abschnitt, einem hinteren Abschnitt, einer Ladeöffnung (11), und einer Abwurföffnung (12);
einen innerhalb des vorderen Abschnitts des Gehäuses (1) angeordneten ersten Rahmen (2), wobei der erste Rahmen (2) eine linke Seite, eine rechte Seite, und eine Kammer (21) zum Halten einer Kapsel (4) mit einer kreisförmigen Kante (41) aufweist;
einen innerhalb des hinteren Abschnitts des Gehäuses (1) angeordneten und hinsichtlich des ersten Rahmens (2) vorwärts und rückwärts bewegbaren zweiten Rahmen (3), der eine linke Seite und eine rechte Seite aufweist;
wobei der Kapselzuführ- und Auswurfmechanismus ferner aufweist:
zwei Backen (5), wobei jede Backe (5) ein vorderes Ende und ein hinteres Ende aufweist, wobei das hintere Ende jeder Backe jeweils drehbar mit der linken und rechten Seite des zweiten Rahmens (3) verbunden ist, wobei das vordere Ende jeder Backe (5) ein Klemmabschnitt (51) ist, der sich zu der Vorderseite des zweiten Rahmens (3) hin erstreckt, wobei der Klemmabschnitt (51) eine Klemmöffnung aufweist, die dazu geeignet ist, die kreisförmige Kante (41) der Kapsel (4) zu verklemmen;
zwei Führungsblöcke (6), wobei jeder Führungsblock (6) an der Vorderseite jeder Backe (5) angeordnet ist, wobei jeder Führungsblock (6) auf der Innenseite jedes Führungsblocks (6) eine Führungsfläche (61) aufweist, die zum Öffnen geführt werden kann, wenn die Führungsfläche (61) die Seitenwände (22) des ersten Rahmens (2) berührt, wobei sich die Führungsblöcke (6) mit den Backen (5) von ihren Ursprungspositionen nach vorne bewegen und die Seitenwände (22) des ersten Rahmens (2) berühren können, und sich dann weiter nach vorne bewegen können, wobei zu dieser Zeit jede Seitenwand (22) des ersten Rahmens eine nach außen gerichtete Kraft auf jede Führungsfläche (61) aufweist, sodass die beiden Führungsblöcke (6) geöffnet werden;
einen Rückstellmechanismus zum Zurückstellen der Führungsblöcke (6), wobei der Rückstellmechanismus dazu geeignet ist, die Führungsblöcke (6) in die Ursprungspositionen zurückzustellen, nachdem der zweite Rahmen (3) rückwärts bewegt wurde, um die Kapsel (4) aus der Kammer (21) zu fördern;
wobei die hintere Stirnfläche (511)jedes Klemmabschnitts (51) in Berührung mit der kreisförmigen Kante (41) der Kapsel (4) kommen kann, wenn jeder Klemmabschnitt (51) sich nach Berühren der kreisförmigen Kante (41) der Kapsel (4) weiter rückwärts bewegt; wobei die hintere Stirnfläche (511)jedes Klemmabschnitts (51) an der kreisförmigen Kante (41) zieht, um die Kapsel (4) aus der Kammer (21) zu befördern;
**dadurch gekennzeichnet, dass**
die Führungsblöcke (6) an der Vorderseite jeder Backe (5) drehbar angeordnet sind, wobei jeder Führungsblock eine hintere Stirnfläche (62) aufweist, wobei eine ringförmig gestufte Fläche (23) im Außenbereich des ersten Rahmens (2) bereitgestellt wird, wobei, wenn der zweite Rahmen (3) mit dem ersten Rahmen (2) verschlossen ist und sich dann rückwärts bewegt, die gestufte Fläche (223) eine Vorwärtskraft auf die hintere Stirnfläche (62) jedes Führungsblocks (6) aufweist, um jeden Führungsblock (6) dazu zu treiben, sich nach außen zu drehen.

2. Der Kapselzuführ- und Auswurfmechanismus nach Anspruch 1, wobei am zweiten Rahmen (3) ein elastischer Mechanismus zum Aufrechterhalten einer nach innen gerichteten Klemmtendenz durch die Backen (5) bereitgestellt wird.

3. Der Kapselzuführ- und Auswurfmechanismus nach Anspruch 2, wobei der elastische Mechanismus eine Drehfeder (7) ist, die auf einer Spindel (52) am rückseitigen Ende der Backen (5) bereitgestellt wird.

4. Der Kapselzuführ- und Auswurfmechanismus nach Anspruch 3, wobei eine Aussparung (31) zum Entgegennehmen jeder Backe (5)jeweils an der linken und rechten Seitenwand des zweiten Rahmens (3) bereitgestellt wird, und wobei das rückseitige Ende jeder Backe (5) innerhalb der Aussparung (31) angeordnet ist; wobei ein erstes Ende der Drehfeder (7) durch ein kleines Loch (53) gehakt ist, das auf einer Backe (5) ausgebildet ist, während ein zweites Ende der Drehfeder (7) der Innenwand der Aussparung (31) der Backe (5) widersteht.

5. Der Kapselzuführ- und Auswurfmechanismus nach Anspruch 1, wobei an den vorderen Enden der Backen (5) Schlitze (54) bereitgestellt werden; wobei die Führungsblöcke (6) in die Schlitze (54) eingesetzt und drehbar in den Schlitzen (54) verbunden sind; wenn in den Ursprungspositionen die hinteren Stirnflächen der Führungsblöcke (6) in Kontakt mit den Bodenflächen der Schlitze (54) sind.

6. Der Kapselzuführ- und Auswurfmechanismus nach Anspruch 5, wobei ein Schaft (63) bereitgestellt wird, der von den oberen und unteren Flächen jedes Führungsblocks (6) hervorspringt, und wobei jede Backe (5) zwei Durchgangslöcher (55) aufweist, die zum Hindurchgehen zweier Enden jedes Schafts (63) jeweils auf den oberen und unteren Seiten jedes Schlitzes (54) angeordnet sind; wobei die oberen und unteren Endflächen (631) des Schafts (63) geneigt sind und wobei die oberen und unteren Innenwände (541) jedes Schlitzes (54) ebenfalls geneigt sind.

7. Der Kapselzuführ- und Auswurfmechanismus nach Anspruch 1, wobei der Rückstellmechanismus ein Anschlagteil (13) ist, welches an einer Seitenwand des Gehäuses (1) bereitgestellt wird und in Anschlagpassung zu den Seitenwänden (64) der Führungsblöcke (6) ist; wobei in dem Zustand, in welchem die Führungsblöcke (6) umgedreht werden, die Seitenwand (64) des zweiten Rahmens (3), die sich rückwärts zu den Führungsblöcken (6) bewegt hat, in Kontakt mit dem Anschlagteil (13) kommt, und sich weiter rückwärts bewegt, und das Anschlagteil (13) einen Vorwärtsschub auf die Seitenwände (64) der Führungsblöcke (6) ausübt, um die Führungsblöcke (6) zum Zurückstellen zu bewegen.

8. Der Kapselzuführ- und Auswurfmechanismus nach Anspruch 1, wobei jede Führungsfläche (61) geneigt ist.

9. Der Kapselzuführ- und Auswurfmechanismus nach Anspruch 1, wobei eine Öffnung (512), welche in einer axialen Richtung hindurch läuft und der kreisförmigen Kante (41) der Kapsel (4) erlaubt, darin eingesetzt zu werden, an einem Innenende des Klemmabschnitts (51) ausgebildet ist, und wobei die Bodenfläche (513) dieser Öffnung (512) eine nach innen gebogene gekrümmte Fläche ist.

## Revendications

1. Mécanisme de distribution et de rejet de capsule pour un dispositif d'infusion de boisson, comprenant :
un boîtier (1) ayant une partie avant, une partie arrière, un orifice de chargement (11) et un orifice de dépôt (12) ;
un premier cadre (2) positionné à l'intérieur de la partie avant du boîtier (1), le premier cadre (2) ayant un côté gauche, un côté droit, une chambre (21) pour contenir une capsule (4) ayant un bord circulaire (41) ;
un deuxième cadre (3) ayant un côté gauche et un côté droit, disposé à l'intérieur de la partie arrière du boîtier (1) et pouvant se déplacer vers l'avant et vers l'arrière par rapport au premier cadre (2) ;
dans lequel le mécanisme de distribution et de rejet de capsule comprend en outre :
deux mâchoires (5), chaque mâchoire (5) ayant une extrémité avant et une extrémité arrière, l'extrémité arrière de chaque mâchoire étant respectivement reliée en rotation aux côtés gauche et droit du deuxième cadre (3), l'extrémité avant de chaque mâchoire (5) étant une partie de serrage (51) s'étendant vers l'avant du deuxième cadre (3), la partie de serrage (51) ayant une ouverture de serrage capable de serrer le bord circulaire (41) de la capsule (4) ;
deux blocs de guidage (6), chaque bloc de guidage (6) étant agencé à l'avant de chaque mâchoire (5), chaque bloc de guidage (6) présentant une surface de guidage (61) au niveau du côté intérieur de chaque bloc de guidage (6) qui peut être guidée pour s'ouvrir lorsque la surface de guidage (61) touche les parois latérales (22) du premier cadre (2), les blocs de guidage (6) peuvent avancer avec les mâchoires (5) à partir de leurs positions d'origine et toucher les parois latérales (22) du premier cadre (2), puis continuent à avancer, à ce moment, chaque paroi latérale (22) du premier cadre (2) exerce une force extérieure sur chaque surface de guidage (61) de façon à amener les deux blocs de guidage (6) à s'ouvrir ;
un mécanisme de réinitialisation pour réinitialiser les blocs de guidage (6), le mécanisme de réinitialisation étant capable de remettre les blocs de guidage (6) dans les positions d'origine après que le deuxième cadre (3) est déplacé vers l'arrière pour transporter la capsule (4) hors de la chambre (21) ;
dans lequel la surface d'extrémité arrière (511) de chaque partie de serrage (51) peut toucher le bord circulaire (41) de la capsule (4), lorsque chaque partie de serrage (51) continue de se déplacer vers l'arrière après avoir touché le bord circulaire (41) de la capsule ; la surface d'extrémité arrière (511) de chaque partie de serrage (51) tirera le bord circulaire (41) pour transporter la capsule (4) hors de la chambre (21) ;
**caractérisé en ce que** les blocs de guidage (6) sont agencés en rotation à l'avant de chaque mâchoire (5), chaque bloc de guidage ayant une surface d'extrémité arrière (62), où une surface étagée annulaire (23) est prévue sur la périphérie du premier cadre (2), lorsque le deuxième cadre (3) est fermé avec le premier cadre (2) et se déplacent ensuite vers l'arrière, la surface étagée (23) exerce une force vers l'avant sur la surface d'extrémité arrière (62) de chaque bloc de guidage (6) pour forcer chaque bloc de guidage (6) de tourner vers l'extérieur.

2. Mécanisme de distribution et de rejet de capsule selon la revendication 1, dans lequel un mécanisme élastique pour permettre aux mâchoires (5) de maintenir une tendance de serrage vers l'intérieur est prévu sur le deuxième cadre (3).

3. Mécanisme de distribution et de rejet de capsule selon la revendication 2, dans lequel le mécanisme élastique est un ressort de torsion (7) prévu sur une broche (52) au niveau de l'extrémité arrière des mâchoires (5).

4. Mécanisme de distribution et de rejet de capsule selon la revendication 3, dans lequel un évidement (31) pour recevoir chaque mâchoire (5) est prévu respectivement sur les parois latérales gauche et droite du deuxième cadre (3), et l'extrémité arrière de chaque mâchoire (5) est située à l'intérieur de l'évidement (31) ; une première extrémité du ressort de torsion (7) est accrochée dans un petit trou (53) formé sur une mâchoire (5), tandis qu'une deuxième extrémité du ressort de torsion (7) résiste contre la paroi intérieure de l'évidement (31) de la mâchoire (5).

5. Mécanisme de distribution et de rejet de capsule selon la revendication 1, dans lequel des fentes (54) sont prévues au niveau des extrémités avant des mâchoires (5) ; les blocs de guidage (6) sont insérés dans les fentes (54) et reliés en rotation dans les fentes (54) ; dans les positions d'origine, les faces d'extrémité arrière des blocs de guidage (6) sont en contact avec les surfaces inférieures des fentes (54).

6. Mécanisme de distribution et de rejet de capsule selon la revendication 5, dans lequel un arbre (63) est prévu de façon à faire saillie sur les surfaces supérieure et inférieure de chaque bloc de guidage (6), et chaque mâchoire (5) a deux trous traversants (55) situés respectivement au niveau des côtés supérieur et inférieur de chaque fente (54) pour le passage de deux extrémités de chaque arbre (63) ; les surfaces d'extrémité supérieure et inférieure (631) des arbres (63) sont des pentes, et les parois intérieures supérieure et inférieure (541) de chaque fente (54) sont également des pentes.

7. Mécanisme de distribution et de rejet de capsule selon la revendication 1, dans lequel le mécanisme de réinitialisation est une partie d'arrêt (13) qui est prévue sur une paroi latérale de boîtier (1) et est en butée sur les parois latérales (64) des blocs de guidage (6) ; dans l'état où les blocs de guidage (6) sont retournés, la paroi latérale (64) du deuxième cadre (3) déplacé vers l'arrière vers les blocs de guidage (6) entre en contact avec la partie d'arrêt (13) et continue de se déplacer vers l'arrière, et la partie d'arrêt (13) exerce une poussée vers l'avant sur les parois latérales (64) des blocs de guidage (6) pour inciter les blocs de guidage (6) à se réinitialiser.

8. Mécanisme de distribution et de rejet de capsule selon la revendication 1, dans lequel chaque surface de guidage (61) est une pente.

9. Mécanisme de distribution et de rejet de capsule selon la revendication 1, dans lequel une ouverture (512) s'étendant dans une direction axiale et permettant au bord circulaire (41) de la capsule (4) de s'y insérer est formée au niveau d'une extrémité intérieure de la partie de serrage (51), et la surface inférieure (513) de cette ouverture (512) est une surface bombée qui est courbée vers l'intérieur.
